(19)

Europäisches
Patentamt
European
Patent Office
Office européen
des brevets

(11)     **EP 2 432 835 B1**

(12)                          **EUROPEAN PATENT SPECIFICATION**

(45) Date of publication and mention
of the grant of the patent:
**27.01.2016 Bulletin 2016/04**

(51) Int Cl.:
*C09C 1/24* *(2006.01)*          *C09C 1/34* *(2006.01)*
*C09C 3/08* *(2006.01)*          *C09C 3/12* *(2006.01)*
*C08K 5/544* *(2006.01)*          *F24J 2/48* *(2006.01)*
*H01L 31/0216* *(2006.01)*

(21) Application number: **10720623.7**

(22) Date of filing: **21.05.2010**

(86) International application number:
**PCT/EP2010/057032**

(87) International publication number:
**WO 2010/133693 (25.11.2010 Gazette 2010/47)**

(54) **COIL-COATED SPECTRALLY SELECTIVE COATINGS ON COPPER OR ALUMINUM WITH PIGMENTS MODIFIED BY AMINOSILANE**

BANDBESCHICHTETE SPEKTRAL SELEKTIVE BESCHICHTUNGEN AUF KUPFER ODER ALUMINIUM MIT AMINOSOLANMODIFIZIERTEN PIGMENTEN

REVÊTEMENTS EN COUCHE MINCE À SÉLECTIVITÉ SPECTRALE ENDUITS EN CONTINU SOUS FORME DE BANDES SUR DU CUIVRE OU DE L'ALUMINIUM COMPRENANT DES PIGMENTS MODIFIÉS PAR AMINOSILANE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **22.05.2009   SI 200900147**

(43) Date of publication of application:
**28.03.2012   Bulletin 2012/13**

(73) Proprietors:
• **ALANOD GmbH & Co. KG**
  **58256 Ennepetal (DE)**
• **HELIOS, tovarna barv,**
  **lakov in umetnih smol Kolicevo, d.o.o**
  **1230 Domzale (SI)**

(72) Inventors:
• **KOZELJ, Matjaz**
  **1301 Krka (SI)**
• **OREL, Boris**
  **1000 Ljubljana (SI)**
• **STEINBUECHER, Miha**
  **1241 Kamnik (SI)**
• **JERMAN, Ivan**
  **3305 Vransko (SI)**
• **VODLAN, Marjanca**
  **1215 Medvode (SI)**

• **PEROS, Dimitrios**
  **57074 Siegen (DE)**

(74) Representative: **Patentanwälte**
**Dr. Solf & Zapf**
**Schlossbleiche 20**
**42103 Wuppertal (DE)**

(56) References cited:
• **B. OREL, Z. C. OREL, A. KRAINER, M.G. HUTCHINS: "FTIR spectroscopic investigations and the thermal stability of thickness sensitive spectrally selective (TSSS) paint coatings" SOLAR ENERGY MATERIALS, vol. 22, 1991, pages 259-279, XP002581949**
• **OREL ET AL: "Silicone-based thickness insensitive spectrally selective (TISS) paints as selective paint coatings for coloured solar absorbers (Part I)" SOLAR ENERGY MATERIALS AND SOLAR CELLS, ELSEVIER SCIENCE PUBLISHERS, AMSTERDAM, NL LNKD- DOI: 10.1016/J.SOLMAT.2006.07.013, vol. 91, no. 2-3, 11 November 2006 (2006-11-11), pages 93-107, XP005760334 ISSN: 0927-0248**

EP 2 432 835 B1

**(Cont. next page)**

- OREL ET AL: "Selective paint coatings for coloured solar absorbers: Polyurethane thickness insensitive spectrally selective (TISS) paints (Part II)" SOLAR ENERGY MATERIALS AND SOLAR CELLS, ELSEVIER SCIENCE PUBLISHERS, AMSTERDAM, NL LNKD- DOI: 10.1016/J.SOLMAT.2006.07.012, vol. 91, no. 2-3, 11 November 2006 (2006-11-11), pages 108-119, XP005760335 ISSN: 0927-0248
- CRNJAK OREL Z: "Characterisation of high-temperature-resistant spectrally selective paints for solar absorbers" SOLAR ENERGY MATERIALS AND SOLAR CELLS, ELSEVIER SCIENCE PUBLISHERS, AMSTERDAM, NL LNKD- DOI:10.1016/S0927-0248(98)00181-0, vol. 57, no. 3, 1 March 1999 (1999-03-01), pages 291-301, XP004363841 ISSN: 0927-0248
- CRNJAK OREL Z C ET AL: "Spectrally selective paint coatings: Preparation and characterization" SOLAR ENERGY MATERIALS AND SOLAR CELLS, ELSEVIER SCIENCE PUBLISHERS, AMSTERDAM, NL LNKD- DOI: 10.1016/S0927-0248(00)00367-6, vol. 68, no. 3-4, 1 June 2001 (2001-06-01) , pages 337-353, XP004230574 ISSN: 0927-0248
- CRNJAK OREL Z ET AL: "Spectrally selective solar absorbers in different non-black colours" SOLAR ENERGY MATERIALS AND SOLAR CELLS, ELSEVIER SCIENCE PUBLISHERS, AMSTERDAM, NL, vol. 85, no. 1, 1 January 2005 (2005-01-01), pages 41-50, XP025333174 ISSN: 0927-0248 [retrieved on 2005-01-01]

**Description**

This invention relates to aminosilane modified pigments, method of their preparation, coatings made with such pigments, their production and application. More specifically, invention relates to a procedure of using aminosilanes for the treatment of various black and coloured pigments with a view to modifying the pigments' surface properties, methods for obtaining the ensuing dispersions and making from them paints and coatings that show enhanced covering efficiency, enabling the preparation of black or coloured Thickness Sensitive Spectrally Selective, TSSS, and Thickness Insensitive Spectrally Selective, TISS, paint coatings, together with the method of their preparation and their use on metal and non-metal substrates.

Pigments treated with various amino functionalized silanes enable the preparation of pigment binder dispersions with essentially improved properties, reflected in smaller particles, their more uniform distribution in organic vehicles, and also providing the compatibility of the pigments' particles with the polymer resin binder matrix, thus enabling the preparation of stable paint systems with enhanced pigment loading and higher hiding properties.

This invention is primarily suitable for obtaining paint coatings for solar absorbers, glazed and unglazed, metallic or non-metallic but it is in no way limited to them.


STATE OF THE ART


The optical properties of any coatings are characterized by their transmittance, T, absorptance, A, and reflectance, R, values, $T + A + R = 1$, which can attain various values in different parts of the electromagnetic spectrum. Typical examples of frequency dependent T (A), R (A) and A ($\lambda$) in the visible part of the solar spectrum, VIS/ 0.3-0.6 $\mu$m, are ordinary paints with various colours, the reflectance of which should only be controlled in this spectral region. Solar cool paints and near infrared camouflage coatings for military applications require careful tuning of the optical properties also in the Near IR, NIR/ 0.6-2.5 $\mu$m, spectral region, while for the spectrally selective coatings for solar absorbers and thermovision camouflage coatings for military applications, the corresponding T (A), R ($\lambda$) and A ($\lambda$) values must be adjusted over the entire spectral region from 0.3 to at least 50 $\mu$m, broad band spectral selectivity. In order to make coatings for the above mentioned applications it is essential to know the optical properties of the pigments and resin binders for each of the spectral regions.

Solar collector paints and corresponding coatings require pigments that exhibit high solar absorptance, as ~0.94-0.95, values in the VIS and NIR solar regions. This is relatively easy to achieve by using black pigments, carbon soot, etc, since they show inherently high absorption in the entire solar spectrum. However, when such coatings are exposed to solar radiation and their temperature increases above the ambient temperature, up to 200 °C at stagnation conditions and up to 80 °C at operating temperatures for domestic solar heat water systems, the absorber surface starts to emit a large portion of its collected thermal energy in the form of thermal infrared radiation, $\lambda > 2.5$ $\mu$m. In order to decrease these thermal radiation losses, the thermal emittance of the solar absorber must be reduced as much as possible, $e_T < 0.10$ or less.

Accordingly, the main characteristic of spectrally selective coatings for solar absorbers is the difference between their solar absorptance, as, and thermal emittance, $e_T$. While high solar absorptance, $a_S$ ~ 0.94-0.95, values are relatively easy to achieve, more effort needs to be devoted to achieve low emittance of coatings.

So far, various strategies exist and have been developed to make black highly solar absorbing coatings that also exhibit low thermal emittance; the chemical vapour deposition technique, CVD, has proved to be the most effective deposition technique on metal, providing solar absorbers with $a_S$ ~ 0.93-0.95 and $e_T < 0.08$-0.05, depending on the metal used as a substrate. In principle, any black coating showing high $a_S$ values could be low emitting when it is deposited on a metallic substrate with low thermal emittance like copper, stainless steel, aluminum, zincated steel, etc. and its physical thickness is comparable or lower to the wavelength of the thermal radiation. This leads to Thickness Sensitive Spectrally Selective, TSSS, paint coatings.

Thin TSSS paint coatings made of black pigment embedded in polymeric resin binder fail in both aspects. The pigment loadings expressed by the pigment to volume ratio - PVC in paints are not as high as in TSSS coatings made by CVD processing, because the absorbing pigment particles do not form a percolated film. Inevitably, $a_S$ values drop below the values characteristic for the bulk pigment, usually well below 0.90. On the other hand, thermal emittance of even very thin TSSS paint coatings is inherently high, due to the absorption of the polymeric binder stemming from the vibrational modes of the polymer itself. The use of polymeric binder in paint coatings cannot be avoided, because it imparts to the coatings the necessary mechanical strength and other application properties. The problem of how to avoid a reduction of $a_S$ and an increase of $e_T$ values of thin TSSS paint coatings is reduced by making paints that enable the provision of a coating consisting of pigment particles arranged in a single layer, in which the pigment particles are laterally linked one to another with the smallest possible amount of polymer binder, probably in the form of a monomolecular layer. Such coatings would have the smallest thickness, equal to the diameter of the elementary particle size of pigment, and consist of closely packed pigment particles bonded together by an organic polymer binder. This can only be achieved with paints made of dispersions with uniformly and finely dispersed pigment particles.

The preparation of such pigment dispersions, with non-agglomerated and finely distributed uniform particles, is not easy and requires careful selection of dispersants capable of providing appropriate interactions with the pigment particle surface and, on the other hand, adequate compatibility with the polymer binder systems.

Organic dispersants are normally used for the production of commercial paints. The preparation of the pigment dispersion starts with the addition of the dispersant to the binder solution before the milling process of the pigment is commenced. This procedure is also common to all procedures related to the preparation of TSSS coatings, as described in Z. Crnjak Orel, N. LeskovŠek, B. Orel, M. G. Hutchins, Spectrally selective silicon paint coatings: Influence of pigment volume concentration ratio on their optical properties. *Sol. Energy mater. sol. cells.* [Print ed.], **1996**, vol. 40, 197-204. A TSSS paint coating prepared with black spinel type pigment and silicone resin binder is described, demonstrating that the latter pigment provides coatings which have an essentially lower $e_T$ than coatings made with lamp black pigment. In the same paper, it is also shown that it is desirable to prepare paints with the highest possible PVC ratios, thus leading to maximized $a_S$ and minimal $e_T$ values, whereby the limiting factors are the adhesion and temperature stability of the coatings. Optimal PVC ratios are between 16 and 20 %, as stated by the authors, while the thickness of the applied coatings has been expressed with the weight in g of dry coating per unit of area in $m^2$, e.g., 2g/$m^2$.

The commercial TSSS paint coating, Solarect-Z24®, is manufactured by Color d. d. (SI). The silicone polyester resin binder in a combination of black spinel pigment enables the production of temperature resistant and mechanically durable black TSSS paint coatings on various metals like copper and aluminum characterized by $a_S$ = 0.90 and $e_T$ = 0.30, values measured for a copper substrate, which is achieved by a coil-coating or spray application technique.

Production of non-black selective surfaces is highly desirable because of their decorative property. Good examples of their use are façade solar absorbers, passive cooling systems or military applications. Examination of the disclosed properties shows that coloured TSSS paint for solar collectors coatings suffer from either too low $a_S$ but $e_T$ values are adequate or $e_T$ and $a_S$ values are acceptable, i. e. having low $e_T$ and high $a_S$. In the latter case, the colour strength, C* of the coatings do not exceed values of about C* = 10, which indicates that the coatings are practically black or gray and thus lack colour. Strong colours, C* > 15-20, are obtained only for thick coatings, i. e. having thickness of at least 2-4 $\mu$m, but such a high thickness inevitably leads to relatively high $e_T$ values, $e_T$ > 0.5. Solar absorptance is also low due to the strong reflection of colours in certain parts of the solar spectrum. The main reason that a high $a_S$ and low $e_T$ cannot be achieved in combination with high C* values is hiding efficiency of the pigments used is too small, stemming from the imperfect dispersal of the pigments in the organic polymer binder [Z. Crnjak Orel, M. KlanjŠek Gunde, B. Orel, M. Kohl, Optical properties of black and green selective paints: stability studies of black painted spectrally selective coatings. In: EuroSun'96 proceedings, A. Goetzberger, J. Luther (Eds.), DGS-Sonnenenergie, Freiburg, Germany, 1996, p. 500-504; Z. Crnjak Orel, B. Orel, A. LenČek, M. Hutchins, Optical properties of black and mixed paint coating in different colour shade on Alsubstrate. In: Eurosun 98, Book of Abstracts, (A. Kreiner, R. Perdan, Z. Kristl (Eds.), International Solar Energy Society - Slovenian Section, Ljubljana, 1998, p. 111.1.3.; Z. Crnjak Orel, M. KlanjŠek Gunde, Solar Energy Mater. Solar Cells, 61 (2000) 445-450.; Z. Crnjak Orel, M. KlanjŠek Gunde, M. G. Hutchins, Solar Energy Mater. Solar Cells, 85 (2005) 41-50.]. Moreover, red TSSS paint coatings have not yet been reported.

In B. Orel, Z. C. Orel, A. Krainer, M. G. Hutchins: "FTIR spectroscopic investigations and the thermal stability of thickness sensitive spectrally selective (TSSS) paint coatings" Solar Energy Materials, vol. 22, 1991, 259-279 is described a process of preparing a TSSS paint coating. Thereby, the paint was prepared from technical grade materials. A phenoxy resin with a molecular weight of 30 000 (Dow Chemicals) was dissolved in ethylglycol acetate and dispersed with inorganic $FeMnCuO_x$ (P320 - Ferro Co.) pigment in a pearl mill. After adding fumed silica (Aerosil 380 - Degussa) and a silane coupling agent (A-187 - Union Carbide) in a high speed rotating dispenser, the paint was dissolved with a 1:1 mixture of butylglycol/ ethylglycol acetate. The silane A-187, which was used as a coupling agent, is not an aminosilane, but an epoxysilane. Further from the description of the process it is clear that silane is not used as a dispersant, but is added after pigment dispersion in a pearl mill.

TISS coatings which can be applied onto metal and non-metal surfaces have been developed over last two decades. Their spectral selectivity has been achieved by adding aluminum pigments and/or other metal and alloy pigments to the coating formulation. Notable publications on the matter have been published by Hoeflaak [M. Hoeflaak: Optimization of spectrally selective coatings for flat plate solar collectors, 8th International conference »Optimising paint formulation: preservation, stabilisation and care«, Amsterdam, November, 1988]. The lowest $e_T$ values achieved in the case of black coatings have been $e_T$ = 0.41, together with the highest solar absorptance of $a_S$ = 0.90.

The addition of non-black pigments or coloured metallic flake pigments to TISS coatings has yielded a series of non-black coatings with either low selectivity or low colour strength due to the less than satisfactorily hiding power of the pigments dispersions used B. Orel, H. Spreizer, L. Slemenik PerŠe, M. Fir, A. urca Vuka, D. Merlini, M. Vodlan, M.

Köhl, Silicone-based thickness insensitive spectrally selective (TISS) paints as selective paint coatings for coloured solar absorbers (Part I), *Solar Energy Materials & Solar Cells* 91, 2007, 93-107 and B. Orel, H. Spreizer, A. Šurca Vuka, D. Merlini,M. Vodlan, M. Köhl, Selective paint coatings for coloured solar absorbers: Polyurethane thickness insensitive spectrally selective (TISS) paints (Part II), *Solar Energy Materials & Solar Cells* 91, 2007, 108-119]. The described coatings are the most suitable for thermal masking of objects and vehicles as camouflage coatings. However, due to the modest spectral selectivity, they are not the best choice TISS coatings for solar absorbers.

The object of the invention is to avoid the deficiencies of the known solutions and to provide production of paints and coatings that show enhanced covering efficiency, enabling the preparation of black or coloured Thickness Sensitive Spectrally Selective and Thickness Insensitive Spectrally Selective paint coatings.

DESCRIPTION OF THE INVENTION AND REALISED EXAMPLES

For a Thickness Sensitive Spectrally Selective (TSSS) coating the aforementioned problem can be solved by a coating on copper or aluminum according to claim 1. The coating is applied by coil-coating and has a solid matter content of:

- an inorganic pigment functionalized by aminosilane        30-75 % (w/w),
- a binder        25-70 % (w/w),
- other pigments        0-40 % (w/w),
- fillers        0-30 % (w/w)
- additives such as but not limited to rheological additives        0-10 % (w/w).

For the functionalization of the pigment by aminosilane the pigment is dispersed in a solution of an aminosilane in a solvent or a mixture of a solvent and a binder, without an addition of a non-aminosilane dispersing agent and with or without subsequent grinding. For the functionalization 0.05-30 % (w/w) of aminosilane is used on the pigment. An aromatic, aliphatic, cycloaliphatic, ketone, ester, ether or alcohol compound or a mixture thereof is use as the solvent. A silicone-polyester, polyurethane or fluoropolymer is used as a binder, whereas said procedure is performed

either *in-situ* during preparation of a paint to manufacture the coating

or by involving pigment paste production

or followed by an isolation of the aminosilane functionalized pigment.

For a Thickness Insensitive Spectrally Selective (TSSS) coating the aforementioned problem can be solved by a coating on copper or aluminum according to claim 3. The coating is applied by coil-coating and has a solid matter content of:

- an inorganic pigment functionalized by aminosilane of at least        5 % (w/w),
- metal flakes        10-50 % (w/w),
- other pigments        0-40 % (w/w),
- binder        25-70 % (w/w),
- fillers        0-30 % (w/w),
- additives such as but not limited to rheological additives        0-10 % (w/w).

For the functionalization of the pigment by aminosilane the pigment is dispersed in a solution of an aminosilane in a solvent or a mixture of a solvent and a binder, without an addition of a non-aminosilane dispersing agent, with or without subsequent grinding. 0.05-30 % (w/w) of aminosilane are uses on the pigment. An aromatic, aliphatic, cycloaliphatic, ketone, ester, ether or alcohol compound or a mixture thereof is as the solvent, and it used a silicone-polyester, polyurethane or fluoropolymer binder. The said procedure is performed

either *in-situ* during preparation of a paint to manufacture the coating or by involving pigment paste production

or followed by an isolation of the aminosilane functionalized pigment.

Below the invention is described more in detail with reference to the drawings, which are showing the following.

Fig. 1: IR spectra of the bare untreated spinel black pigment (A), coated pigment functionalized with aminosilane (B) and amino silane used as dispersant (C).

Fig 2: SEM image of TSSS paint coating prepared with silane functionalized black spinel pigment, scale 10 μm.

Fig. 3: SEM image of TSSS paint coating prepared with black spinel pigment dispersed with Disperbyk 163® (BYK Chemie GmbH), scale 10 μm.

Fig. 4: Solar absorptance $a_S$ as a function of the weight of the paint layer in g/m2 for TSSS paint coatings described in Example 2. For comparison, the same data are given for the commercially available coating Solarect-Z24®, manufactured by Color d. d..

Fig. 5: Thermal emittance $e_T$ as a function of the weight of the paint layer in g/m$^2$ for the TSSS paint coatings described in Example 2. For comparison, the same data are given for the commercially available coating Solarect-Z24®, manufactured by Color d. d..

The optical properties of the samples were determined from the measured IR absorption and reflectance spectra of at least $5 \times 5$ cm$^2$ sized samples. Reflectance spectra in the visible (VIS) and near-infrared (NIR) range were measured on a Perkin Elmer Lambda 950 UV/Vis/NIR with integration sphere (module 150 mm), while spectra in the middle IR spectral range were obtained on a Bruker IFS 66/S spectrometer equipped with an integrating sphere (OPTOSOL), using a gold plate as a standard for diffuse reflectance. The solar absorptance ($a_S$) and thermal emittance ($e_T$) values for bare Sunselect MTMS-protected Sunselect were calculated according to a standard procedure: M. Kohl, G. Jorgensen, A.W. Czanderna, Performance and Durability Assessment: Optical Materials for Solar Thermal Systems, Elsevier, The Netherlands, 2004 and M.G. Hutchins, Spectrally selective materials for efficient visible, solar and thermal radiation control, in: M. Santamouris (Ed.), Solar Thermal Technologies for Buildings, James & James, London, 2003. C* values were determined from reflectance spectra (recorded on previous mentioned machines) according to CIE Technical report: Colorimetry 3rd ed. 2004, The International Commission on Illumination, Wien, p. 17 (ISBN 3 901 906 33 9).

The core of this invention is the functionalization of the inorganic pigment with aminosilane, performed by dispersing the pigment in a solution of aminosilane in solvent or various solvent mixtures together with the organic polymer binder, followed by the milling of pigment/aminosilane/solvent/binder dispersion. This process leads to firm and irreversible bonding of the silanes onto the pigment surface. Dispersions/pigment pastes made of functionalized pigments enable the preparation of various paints appropriate for various applications, as described in the examples below and the patent claims.

Functionalization of pigment particles with aminosilanes and evidence for the applied procedure

The pigments intended to be functionalized are of, but are not limited to, spinel and oxides of titanium, chromium, iron, zinc and the corresponding mixed oxides and oxyhydroxides.

Solvents are preferably, but not limited to, aliphatic, cycloaliphatic, aromatic and heteroaromatic compounds, alcohol, ester, ether type or mixtures thereof.

The binders are preferably, but not limited to, silicone or substituted silicones, polyurethanes and fluoro co-polymers or a mixture of corresponding binders.

The key compounds of this invention are various aminosilanes described by the formula

$$Si \sum_{n} R_n \sum_{m} R_m,$$

where n + m = 4 and $R_n$ represents an un-substituted or substituted alkyloxy or cycloalkyloxy group of $C_1$ to $C_7$ or an un-substituted or substituted aryloxy or hetereroaryloxy 5-7 member ring group or chloro substituent, $R_m$ represents an amino or polyamino substituted alkyl or cykloalkyl group of $C_1$ to $C_{18}$ or aminosubstituted aryl or hetereroaryl 5-7 member ring. In addition, the aminosilane could be an oligomere of such a compound.

Additives are compounds or mixtures of them added to paint formulations in an amount of 10 % or less of the total formulation, which serve to improve the dispersion process, the application of the dispersed pigments and the adjustment of specific properties of the paints and the ensuing coatings such as, but not limited to, their rheological, surface and adhesion properties. The term additive does not comprise dispersal agents.

The procedure for inorganic pigment functionalization with aminosilanes consists of dispersing the pigment in a solution of 0.05-30 % of the aminosilane by weight of the pigment, in a solvent or solvent binder mixture for 5 minutes to 6 hours. Dispersal may be followed by grinding of the said dispersion to the desired fineness. In order to improve the efficiency of dispersal and or milling the pigments, a suitable amount of binder and/or standard additives may be included in the formulations.

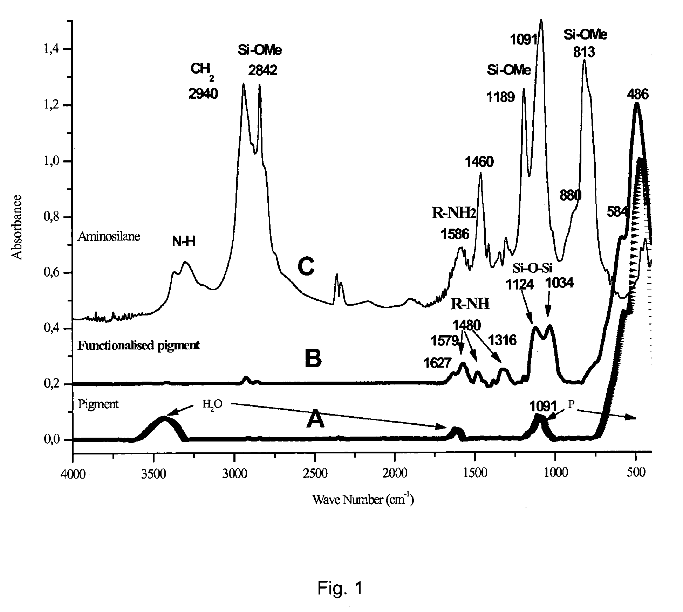

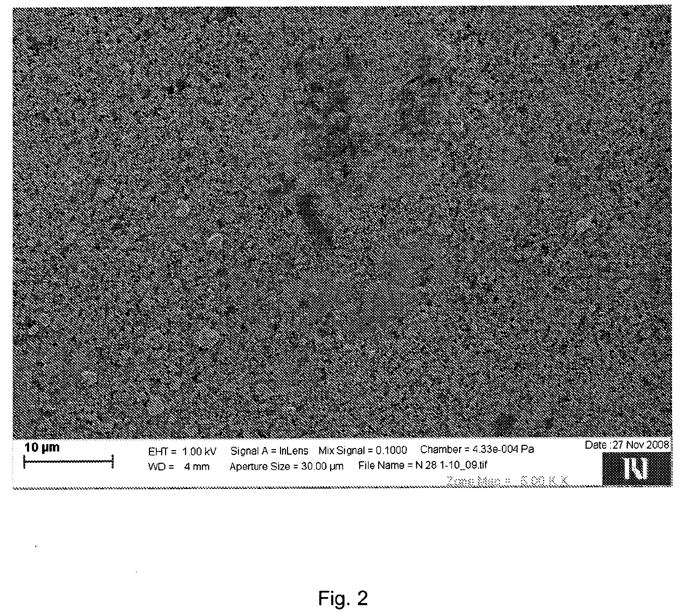

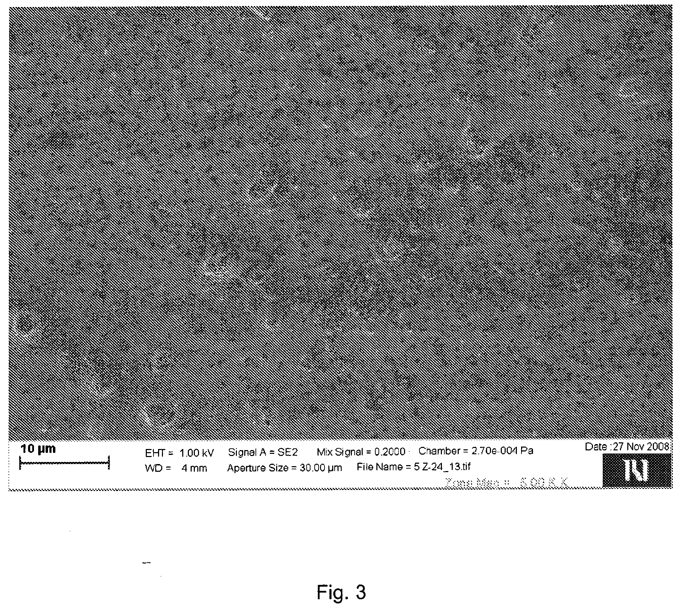

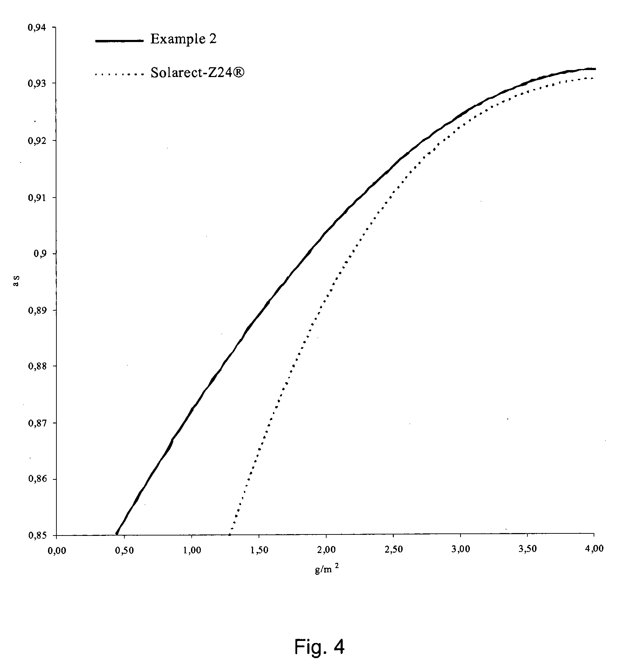

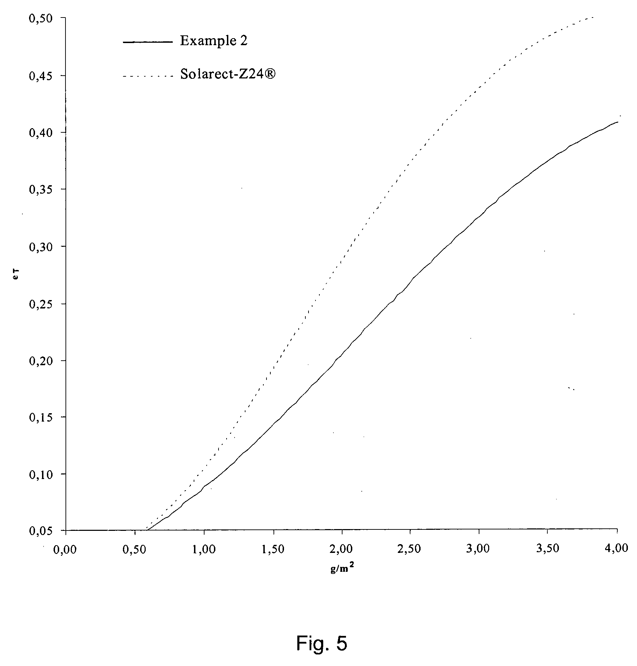

The functionalization of an inorganic pigment by aminosilanes is demonstrated by three interrelated but independent sets of results: (i) infrared spectra of functionalized pigments (Fig. 1), (ii) the state of dispersions obtained after the application of aminosilane dispersants (Fig. 2 and 3) and (iii) the optical properties of the paint coatings (Fig. 4 and 5) prepared from the corresponding pigment dispersions.

(i) The first experiment undoubtedly proves that the aminosilanes bond onto the surface of the pigment particle during the dispersal and subsequent milling of the pigment in the aminosilane-solvent-resin binder solution.

Fig. 1 shows the IR spectra of the bare 24-3060 PK pigment (Ferro GmbH) (A), pigment functionalized with aminosilane (B) and aminosilane (C). For example, in the spectrum of the bare pigment, in addition to the bands attributed to the pigment indicated by P weak bands of the water were seen due to the moisture present in untreated commercial pigment. The presence of moisture is important, since it triggers hydrolysis of the aminosilane which leads to the formation of the silanol groups required for achieving condensation of the aminosilane directly onto the surface of the pigment.

The functionalized pigment was taken out of the reaction mixture and immediately thoroughly rinsed with solvent in order to remove all the non-bonded species from its surface, then the IR spectra (Fig. 1B) was recorded. In the IR spectra, the characteristic absorption bands of the amino groups, marked R-NH, were recognized, together with bands attributed to the siloxane groups, marked Si-O-Si. The frequencies of the R-NH and the Si-O-Si bands shifted and changed their intensities, clearly demonstrating the condensation of the hydrolyzed aminosilane and its bonding to the pigment surface. Because the IR spectra of the surface functionalized pigment (Fig. 1 B) showed bands of the condensation products of the hydrolysis-condensation reactions of the aminosilane (Fig. 1 C), it was impossible to rule out the possibility of self-condensation of aminosilane molecules. However, self-condensed aminosilane species did not detrimentally impact on the effectiveness of the pigment particles' functionalization, but merely indicated that a thicker aminosilane layer formed during the bonding and dispersal process. Accordingly, the IR spectra proved the formation of a pigment wrapped by variously interlinked aminosilane moieties via the Si-O-Si bonds, thus excluding the existence of two separated and non-interacting pigment and aminosilane phases.

(ii) The second experiment shows the difference in morphology of dispersions of aminosilane functionalized and non-functionalized pigments.

Two pigment dispersions with the same PVC ratios were made by dispersion, and subsequently ground to the same fineness < 1 $\mu$m, measured according to ISO 1524. Both dispersions were applied in the form of thin layer onto the metal substrate and allowed to dry and cure to harden. Comparison of the corresponding SEM micrographs (Fig. 2 and 3) shows that the pigment particles are more evenly distributed in the dispersion prepared with the aminosilane-functionalized pigment, which can be inferred from the even distribution and smaller size of the pigment particles, while the SEM micrographs of the paint dispersions made of non-functionalized pigment showed lumps and regions in which the pigment particles were agglomerated and their distribution was not uniform.

(iii) This experiment provided the final and the most convincing proof of the effective modification of the pigments' surface by aminosilane dispersants. Two different TSSS paint coatings were applied onto a copper substrate by spraying in order to make TSSS coatings with various thicknesses. The first, called Example 2, was based on the aminosilane functionalized pigment corresponding to the paint described in Example 2, while the second one, called Solarect Z-24®, corresponded to commercial Solarect Z-24® TSSS paint coatings manufactured by Color d. d. (SI). The thickness of the deposited TSSS paint coatings was controlled by altering the amount of solvent added to the prepared paints and was expressed by the weight of dry paint per m$^2$. The paints were first dried and then temperature cured and their $a_S$ and $e_T$ values were then determined from the measured hemispherical IR reflection spectra. The results shown in Fig. 4 and 5 reveal that the coatings made of the paint (Example 2) with the functionalized pigments exhibited higher solar absorptance and lower thermal emittance values than the Solarect Z-24® paint coatings with the same physical thickness. Higher solar absorptance values indirectly proved that the covering efficiency of the paints made from the aminosilane treated pigment dispersions was higher than those made of the commercial Solarect Z-24® coatings (Fig. 5). The beneficial effect of functionalized pigment can also be understood from Fig. 4, which shows the variation of thermal emittance values of the commercial Solarect Z-24® and Example 2 coatings as a function of the coating thickness expressed in grams of dry paint film per m$^2$. The thermal emittance of the coatings made of functionalized pigment dispersion clearly exhibited lower $e_T$ values than the thermal emittance of the commercial Solarect Z-24® paint coatings. The beneficial effect of the aminosilane treatment on thermal emittance values was more pronounced, up to 10 %, than on solar absorptance values, 1-3 %, when the same coating thicknesses were considered. To conclude, the results showed that the use of aminosilane for the paint preparation resulted in increased solar absorptance and simultaneous reduction of the thermal emittance of the coatings. In other words, the former TSSS coatings exhibited higher spectral selectivity.

The preparation of the aminosilane-functionalized pigments and dispersions

Aminosilane functionalized pigments can be isolated after functionalization by filtering the dispersion, washing it with solvents and then drying the washed pigment. Other separation methods, subject to practicability or their availability, can also be used.

Pigment pastes could be prepared from aminosilane functionalized pigments in much the same way as pastes made of other non-functionalized pigments: functionalization can be preformed, preferably at the earliest possible stage, in the production of the pastes or an isolated functionalized pigment can be used.

For functionalized pigment paints, pigments can be functionalized *in-situ* during preparation of the paint. It is recommended that pigment functionalization be performed at the earliest possible stage in the production process. Alternatively, functionalized pigment paste or an isolated functionalized pigment can be used.

In general, the preparation procedure for functionalized pigment dispersions followed common procedures used in the paint industry.

The application and usage of aminosilane functionalized pigments for making paints: TSSS and TISS spectrally selective coatings

Due to their enhanced covering efficiency and the ability to form stable pigment dispersions with much higher pigment loadings than ordinary paints, aminosilane-functionalized pigments are suitable for the manufacture of any paint coatings in which high pigment loadings combined with excellent mechanical stability and specific optical effects, such as high solar absorptance and low thermal emittance are desired. TSSS and TISS paint coatings for solar absorbers are typical examples of their application.

[0039] - Black TSSS paint coatings for solar absorbers with spectral selectivity as high as $a_S = 0.91$, $e_T = 0.06$ and good adhesion and thermal stability can be made by using aminosilane functionalized pigments. Coloured, i. e., non-black or gray, TSSS coatings for solar absorbers, where their aesthetic appearance is important, with spectral selectivity as high as $a_S = 0.85$, $e_T = 0.18$ and colour strength of $C^* = 18$, retaining good adhesion and thermal stability, can be made by using aminosilane functionalized pigments. All the aforementioned TSSS paint coatings should have a solid matter content, i. e., aminosilane functionalized pigment, of 30-75 %, 25-70 % of binder, 0-40 % of other pigments, 0-30 % fillers and 0-10 % additives.

- TSSS paints can be applied to a metal or a metalized surface by spraying, coil-coating or dipcoating.

- Black and gray TISS coatings for solar absorbers suitable for solar collector systems with spectral selectivity as high as $a_S = 0.91$ and $e_T = 0.35$, and coloured, i. e., non-black or gray, TISS paint coatings for solar absorbers with spectral selectivity as high as $a_S = 0.84$, $e_T = 0.40$ and colour strength ranging from $C^* = 10$ up to $C^* = 20$, can be made by using aminosilane modified pigment dispersions. Regardless their colour, TSSS and TISS paint coatings offer excellent coatings, showing good adhesion, thermal and UV stability and excellent corrosion resistance and moderate abrasion resistance. TISS coatings should have a solid matter content of 5-70 % aminosilane functionalized pigment, 10-50 % metal flakes of either natural look or coloured, 0-40 % other pigments, 0-30 % fillers, 25-70 % binder and 0-10 % additives.

- Aminosilane functionalized pigments offer an excellent choice for thermovision camouflage paints for military applications for moving or stationary objects and are characterized by a broad frequency response from 0.3 up to 50 $\mu$m and the ability to provide camouflage in the form of a single coat of the paint. Their shade can be adjusted in terms of the need to make an object with low observance in various environments like marine, earth, snow, deserts, forests, with the ability to reduce the the radiative temperature by at least 50 %. They offer good adhesion, thermal and UV stability and excellent corrosion resistance, and adequate abrasion resistance for this application. Their optical properties in the VIS, NIR and thermal IR parts of the electromagnetic spectrum ensure good blending with the surroundings. Their typical composition is similar to those used for coloured TISS paint coatings: 5-70 % aminosilane functionalized pigment, 10-50 % metal flakes of either natural look or coloured, 0-40 % other pigments, 0-30 % fillers, 25-70 % binder and 0-10 % additives.

- TISS paints can be applied to a metal or a non-metal surface by spraying, coil-coating or dipcoating.

- Aminosilane functionalized pigments, such as titanium dioxide or zinc oxide, are suitable for making solar cool paints and as micro-fillers for transparent lacquers and bulk commodity plastics. The invention is additionally explained by the following examples, which are in no way limiting.

Example 1

General procedure for a 45 % pigment paste made of aminosilane functionalized pigment and silicone-polyester binder

Silikoftal® Non-stick 60 (Evonik Tego Chemie GmbH)    170 g

(continued)

| An inorganic pigment | 450 g |
| Bentone® SD-2 (Elementis Specialties, Inc.) | 10 g |
| [3-(2-aminoethyl)aminopropyl]trimetoxysilane | 25 g |
| Xylene | 230 g |
| n-butylacetate | 115 g |

An inorganic pigment is gradually added to a solution of [3-(2-aminoethyl)amino-propyl]trimethoxysilane in xylene under continuous dispersion. When the addition has been completed, dispersion is continued for a further 15 minutes, then 150 g Silikoftal® Non-stick 60 is added under constant dispersion, followed by Bentone® SD-2 and dispersion continued for a further 15 minutes. The obtained dispersion is milled in a sand mill at approximately ~ 3000 RPM to a particle size < 1 μm (ISO 1524). N-butylacetate is added under constant dispersion.

Example 2

Black silicone-polyester TSSS coating prepared from an aminosilane functionalized pigment paste

45 % black aminosilane functionalized pigment paste made according

| to Example 1 with 24-3060 PK pigment (Ferro GmbH) | 890 g |
| Silikoftal® Non-stick 60 (Evonik Tego Chemie GmbH) | 110 g |

Silikoftal® Non-stick 60 is added under constant dispersion to a 45 % black aminosilane functionalized pigment paste made according to Example 1 with 24-3060 PK pigment (Ferro GmbH).

A coating prepared in such a way, suitably diluted, can be applied by coil- coating or spray coating methods. The deposited coating is hardened by heating at 200-250 °C for 10-20 min, or for a longer time at lower temperatures, if the substrate requires such a reduction of the curing temperature.

By spraying the paint onto a copper substrate, the prepared coating with an equivalent thickness of 1 g/m$^2$ has adhesion of Gt0 (ISO 2409), and its spectral selectivity is denoted by $a_S$ = 0.91 and $e_T$ = 0.06.

Example 3

Black 2-component polyurethane TSSS coating

| Desmophen® A 365 (Bayer MaterialScience AG) | 240 g |
| 24-3060 PK (Ferro GmbH) | 381 g |
| Bentone® SD-2 (Elementis Specialties, Inc.) | 13 g |
| 3-aminopropyltrimethoxysilane | 13 g |
| Xylene | 168 g |
| *n*-butylacetate | ..91 g |
| BYK® 410 (BYK-Chemie GmbH) | 3 g |
| Desmodur® N 75 (Bayer MaterialScience AG) | 91 g |

Component A is prepared by gradually adding black pigment 24-3060 PK to a solution of 3-aminopropyltrimethoxysilane in xylene under continuous dispersion. After adding has been completed, mixing continues for a further 15 minutes, then 150 g Desmophen® A 365 is also added under constant dispersion, followed by Bentone® SD-2 and dispersion continued for a further 15 minutes. The obtained dispersion is milled in a sand mill at approximately 3000 RPM to a particle size < 1 μm (ISO 1524). While continuously dispersing, a further 90 g Desmophen® A 365, butylacetate and BYK® 410 are added to the paste.

Prior to use, component A of the coating prepared in such a way is mixed with component B, Desmodur® N 75.

A coating prepared in such a way, suitably diluted, can be applied by coil-coating or spray coating methods.

By spraying the paint onto a copper substrate, the prepared coating with an equivalent thickness of 1 g/m2 has adhesion of Gt0 (ISO 2409), and its spectral selectivity is denoted by $a_S$ = 0.92 in $e_T$ = 0.18.

Example 4

Black silicone-polyester TISS coating prepared from an aminosilane functionalized pigment paste

45 % black aminosilane functionalized pigment paste made

| | |
|---|---|
| according to Example 1 with 24-3060 PK pigment (Ferro GmbH) | 327 g |
| Alubright 3100 (Schlenk Metallic Pigments GmbH) | 274 g |
| BYK® 410 (BYK-Chemie GmbH) | 10 g |
| 4-hydroxy-4-methylpentan-2-one | 12 g |
| Silikoftal® Non-stick 60 (Evonik Tego Chemie GmbH) | 245 g |
| n-butylacetate | 50 g |
| Solvesso® 100 (Exxon Mobil Corporation) | 50 g |
| Additol® XL 186 (Cytec Industries inc.) | 32 g |

The 45 % black aminosilane functionalized pigment paste made according to Example 1 with 24-3060 PK pigment (Ferro GmbH) is slowly worked into Alubright 3100 and Silikoftal® Non-stick 60, 4-hydroxy-4-methylpentan-2-one, n-butylacetate, Solvesso® 100, Additol® XL 186 and BYK® 410 are added under constant dispersion.

A coating prepared in such a way, suitably diluted, can be applied by the coil-coating or spray coating methods.

When properly applied by the spray coating method, a coating prepared in such a way with a thickness of 30 to 100, mm has adhesion of Gt0 (ISO 2409) and its spectral selectivity is denoted by $a_S = 0.90$ in $e_T = 0.35$.

Example 5

Brick red silicone-polyester TSSS coating prepared from aminosilane functionalized pigment pastes

45 % red aminosilane functionalized pigment paste made according to Example 1

| | |
|---|---|
| with Bayferrox 130M pigment (LANXESS Deutschland GmbH) | 855 g |
| 45 % black aminosilane functionalized pigment paste made according to Example 1 with 24-3060 PK pigment (Ferro GmbH) | 95 g |
| Silikoftal® Non-stick 60 (Evonik Tego Chemie GmbH) | 50 g |

The 45 % black aminosilane functionalized pigment paste made according to Example 1 with 24-3060 PK pigment (Ferro GmbH) and Silikoftal® Non-stick 60 is added under constant dispersion to 45 % red aminosilane functionalized pigment paste made according to Example 1 with Bayferrox 130M pigment (LANXESS Deutschland GmbH).

A coating prepared in such a way, suitably diluted, can be applied by the coil-coating or spray coating methods. The deposit is hardened by heating at 200-250 °C for 10-20 min, or longer at lower temperatures if the substrate requires such a reduction.

A coating prepared in such a way, properly sprayed onto a copper substrate with a gramature (thickness) of 2 g/m2, has adhesion of Gt0 (ISO 2409), its spectral selectivity is denoted by $a_S = 0.85$ and $e_T = 0.18$ and its color strength is denoted by $C^* = 18$.

Example 6

Blue silicone-polyester TISS coating prepared from an aminosilane functionalized pigment paste and colored metal pigment

45 % black aminosilane functionalized pigment paste made

| | |
|---|---|
| according to Example 1 with 24-3060 PK pigment (Ferro GmbH) | 58 g |
| Standart® Alucolor Blau 1504 (Eckart GmbH & Co. KG) | 232 g |
| BYK® 410 (BYK-Chemie GmbH) | 4 g |
| 4-hydroxy-4-methylpentan-2-one | 8 g |
| Silikoftal® Non-stick 60 (Evonik Tego Chemie GmbH) | 234 g |

(continued)

| | |
|---|---|
| Methoxypropylacetate | 174 g |
| Solvesso® 100 (Exxon Mobil Corporation) | 174 g |
| Color Uni pasta Violet RL (Color d.d.) | 116 g |

The 45 % black aminosilane functionalized pigment paste made according to Example 1 with 24-3060 PK pigment (Ferro GmbH) is slowly worked into Standart® Alucolor Blau 1504 (Eckart GmbH & Co. KG) and, under constant dispersion, Silikoftal® Non-stick 60, 4-hydroxy-4-methylpentan-2-one, n-butylacetate, Solvesso® 100, Additol® XL 186 and BYK® 410 are added.

A coating prepared in such a way, suitably diluted, can be applied by coil-coating or spray coating methods.

When properly applied by the spray coating method, a coating prepared in such a way with a thickness of 30 to 100 mm has adhesion of Gt0 (ISO 2409), its spectral selectivity is denoted by $a_S = 0.87$ in $e_T = 0.43$ and its color strength is denoted by C* = 17.

Example 7

Olive green silicone-polyester TISS coating prepared from an aminosilane functionalized pigment pastes

| | |
|---|---|
| 45 % green aminosilane functionalized pigment paste made according to Example 1 with GN-M pigment (LANXESS Deutschland GmbH) | 216 g |
| 45 % yellow aminosilane functionalized pigment paste Made according to Example 1 with Bayferrox 3920 pigment (LANXESS Deutschland GmbH) | 110 g |
| 45 % black aminosilane functionalized pigment paste made according to Example 1 with 24-3060 PK pigment (Ferro GmbH) | 80 g |
| Alubright 3100 (Schlenk Metallic Pigments GmbH) | 310 g |
| BYK® 410 (BYK-Chemie GmbH) | 10 g |
| 4-hydroxy-4-methylpentan-2-one | 12 g |
| Silikoftal® Non-stick 60 (Evonik Tego Chemie GmbH) | 150 g |
| n-butylacetate | 40 g |
| Solvesso® 100 (Exxon Mobil Corporation) | 40 g |
| Additol® XL 186 (Cytec Industries inc.) | 328 g |

All three 45 % aminosilane functionalized pigment pastes made according to Example 1 are slowly worked into Alubright 3100 and, under constant dispersion, Silikoftal® Non-stick 60, 4-hydroxy-4-methylpentan-2-one, n-butylacetate, Solvesso® 100, Additol® XL 186 and BYK® 410 are added.

A coating prepared in such a way, suitably diluted, can be applied by coil-coating or spray coating methods. When properly applied by the spray coating method, a coating prepared in such a way with a thickness of 30 to 100 mm has adhesion of Gt0 (ISO 2409), its spectral selectivity is denoted by $a_S = 0.83$ in $e_T = 0.42$ and its color strength is denoted by C* = 13.

**Claims**

1. A Thickness Sensitive Spectrally Selective (TSSS) coating on copper or aluminum applied by coil-coating and having a solid matter content of:

- an inorganic pigment functionalized by aminosilane     30-75 % (w/w),
- a binder     25-70 % (w/w),
- other pigments     0-40 % (w/w),
- fillers     0-30 % (w/w)
- additives such as but not limited to rheological additives     0-10 % (w/w),

wherein for the functionalization of the pigment by aminosilane the pigment is dispersed in a solution of an aminosilane in a solvent

or a mixture of a solvent and a binder

without an addition of a non-aminosilane dispersing agent

with or without subsequent grinding and with the use of 0.05-30 % (w/w) of aminosilane on pigment

and use of an aromatic, aliphatic, cycloaliphatic, ketone, ester, ether or alcohol compound or a mixture thereof as the solvent

and use of a silicone-polyester, polyurethane or fluoropolymer binder, whereas said procedure is performed either *in-situ* during preparation of a paint to manufacture the coating or by involving pigment paste production or followed by an isolation of the aminosilane functionalized pigment.

2. The coating on copper or aluminum according to Claim 1, prepared by use of the pigment paste, the pigment paste having a solid matter content of:

- the pigment functionalized by aminosilane          30-90 % (w/w),
- a binder          7-70 % (w/w),
- additives such as but not limited to rheological additives          0-10 %(w/w).

3. A Thickness Insensitive Spectrally Selective (TISS) coating on copper or aluminum applied by coil-coating and having a solid matter content of:

- an inorganic pigment functionalized by aminosilane of at least          5 % (w/w),
- metal flakes          10-50 % (w/w),
- other pigments          0-40 % (w/w),
- binder          25-70 % (w/w),
- fillers          0-30 % (w/w),
- additives such as but not limited to rheological additives          0-10 % (w/w),

wherein for the functionalization of the pigment by aminosilane the pigment is dispersed in a solution of an aminosilane in a solvent

or a mixture of a solvent and a binder

without an addition of a non-aminosilane dispersing agent

with or without subsequent grinding and with the use of 0.05-30 % (w/w) of aminosilane on pigment

and use of an aromatic, aliphatic, cycloaliphatic, ketone, ester, ether or alcohol compound or a mixture thereof as the solvent

and use of a silicone-polyester, polyurethane or fluoropolymer binder, whereas said procedure is performed either *in-situ* during preparation of a paint to manufacture the coating or by involving pigment paste production or followed by an isolation of the aminosilane functionalized pigment.

4. The coating on copper or aluminum according to Claim 3, prepared by use of the pigment paste, the pigment paste having a solid matter content of:

- the pigment functionalized by aminosilane          30-90 % (w/w),
- a binder          7-70 %(w/w),
- additives such as but not limited to rheological additives          0-10 % (w/w).

5. The coating on copper or aluminum according to one of Claims 1 to 4, **characterized by** a spectral selectivity of $a_S \geq 0.90$ solar absorptance and by a thermal emittance of $e_T \leq 0.40$, preferably $e_T \leq 0.20$.

6. The coating on copper or aluminum according to one of Claims 1 to 5, wherein the coil-coating is performed as an application of a paint or a lacquer by rollers.

7. The coating on copper or aluminum according to one of Claims 1 to 6, wherein the coil-coating is performed as an application of a paint or a lacquer by one or more slot dies.

8. A coil of copper or aluminum with a coating according to one of Claims 1 to 7.

**Patentansprüche**

1. Dickensensible, spektral selektive (TSSS-)Beschichtung auf Kupfer oder Aluminium, die über Bandbeschichtung aufgetragen ist und einen Feststoffgehalt aufweist von:

   - einem anorganischen Pigment, durch Aminosilan funktionalisiert 30 - 75 % (Gew./Gew.),
   - einem Bindemittel 25 - 70 % (Gew./Gew.),
   - anderen Pigmenten 0 - 40 % (Gew./Gew.),
   - Füllstoffen 0 - 30 % (Gew./Gew.),
   - Additiven, wie etwa, aber nicht beschränkt auf rheologische Additive 0 - 10 % (Gew./Gew.),

   wobei für die Funktionalisierung des Pigments durch Aminosilan das Pigment dispergiert wird in einer Lösung eines Aminosilans in einem Lösemittel
   oder in einem Gemisch aus einem Lösemittel und einem Bindemittel
   ohne Zugabe eines Nicht-Aminosilan-Dispergiermittels
   mit oder ohne anschließende Vermahlung und unter Verwendung von 0,05 - 30 % (Gew./Gew.) des Aminosilans an Pigment
   und unter Verwendung einer aromatischen, aliphatischen, cycloaliphatischen, Keton-, Ester-, Ether- oder Alkoholverbindung oder einer Mischung davon als das Lösemittel
   und unter Verwendung eines Silikon-Polyesters, Polyurethans oder Fluorpolymerbindemittels, wobei das Verfahren durchgeführt wird entweder in situ während der Zubereitung von einem Anstrich zur Herstellung der Beschichtung
   oder durch den Einsatz von Pigmentpasten-Herstellung
   oder gefolgt von einer Isolierung des durch Aminosilan funktionalisierten Pigments.

2. Beschichtung auf Kupfer oder Aluminium nach Anspruch 1, zubereitet durch die Verwendung der Pigmentpaste, wobei die Pigmentpaste einen Feststoffgehalt aufweist von:

   - dem Pigment, durch Aminosilan funktionalisiert 30 - 90 % (Gew./Gew.),
   - einem Bindemittel 7 - 70 % (Gew./Gew.),
   - Additiven, wie etwa, aber nicht beschränkt auf rheologische Additive 0 - 10 % (Gew./Gew.).

3. Dickeninsensitive, spektral selektive (TISS-)Beschichtung auf Kupfer oder Aluminium, die über Bandbeschichtung aufgetragen ist und einen Feststoffgehalt aufweist von:

   - einem anorganischen Pigment, durch Aminosilan funktionalisiert von mindestens 5 % (Gew./Gew.),
   - Metall-Flakes 10 - 50 % (Gew./Gew.),
   - anderen Pigmenten 0 - 40 % (Gew./Gew.),
   - Bindemitteln 25 - 70 % (Gew./Gew.),
   - Füllstoffen 0 - 30 % (Gew./Gew.),
   - Additiven, wie etwa, aber nicht beschränkt auf rheologische Additive 0 - 10 % (Gew./Gew.),

   wobei für die Funktionalisierung des Pigments durch Aminosilan das Pigment dispergiert wird in einer Lösung eines Aminosilans in einem Lösemittel
   oder in einem Gemisch aus einem Lösemittel und einem Bindemittel
   ohne Zugabe eines Nicht-Aminosilan-Dispergiermittels
   mit oder ohne anschließende Vermahlung und unter Verwendung von 0,05 - 30 % (Gew./Gew.) des Aminosilans an Pigment
   und unter Verwendung einer aromatischen, aliphatischen, cycloaliphatischen, Keton-, Ester-, Ether- oder Alkoholverbindung oder einer Mischung davon als das Lösemittel
   und unter Verwendung eines Silikon-Polyesters, Polyurethans oder Fluorpolymerbindemittels, wobei das Verfahren durchgeführt wird entweder in situ während der Zubereitung von einem Anstrich zur Herstellung der Beschichtung
   oder durch den Einsatz von Pigmentpasten-Herstellung
   oder gefolgt von einer Isolierung des durch Aminosilan funktionalisierten Pigments.

4. Beschichtung auf Kupfer oder Aluminium nach Anspruch 3, zubereitet durch die Verwendung der Pigmentpaste, wobei die Pigmentpaste einen Feststoffgehalt aufweist von:

   - dem Pigment, funktionalisiert durch Aminosilan 30 - 90 % (Gew./Gew.),

- einem Bindemittel 7 - 70 % (Gew./Gew.),
- Additiven, wie etwa, aber nicht beschränkt auf rheologische Additive 0 - 10 % (Gew./Gew.).

**5.** Beschichtung auf Kupfer oder Aluminium nach einem der Ansprüche 1 bis 4, **gekennzeichnet durch** eine spektrale Selektivität von $a_S \geq 0{,}90$ Sonnenabsorptionsvermögen und **durch** ein thermisches Emissionsvermögen von $e_T \leq 0{,}40$, vorzugsweise $e_T \leq 0{,}20$.

**6.** Beschichtung auf Kupfer oder Aluminium nach einem der Ansprüche 1 bis 5, wobei die Bandbeschichtung als eine Auftragung eines Anstrichs oder eines Lackes durch Walzen durchgeführt wird.

**7.** Beschichtung auf Kupfer oder Aluminium nach einem der Ansprüche 1 bis 6, wobei die Bandbeschichtung als eine Auftragung eines Anstrichs oder eines Lackes mit einer oder mehreren Schlitzdüsen durchgeführt wird.

**8.** Rolle aus Kupfer oder Aluminium mit einer Beschichtung nach einem der Ansprüche 1 bis 7.


**Revendications**

**1.** Revêtement à sélectivité spectrale sensible à l'épaisseur (TSSS) sur cuivre ou aluminium appliqué par laquage en continu et ayant une teneur en matières solides de :

- un pigment inorganique fonctionnalisé par aminosilane          30-75 % (m/m),
- un liant          25-70 % (m/m),
- d'autres pigments          0-40 % (m/m),
- des charges          0-30 % (m/m),
- des additifs tels que, sans s'y limiter, des additifs rhéologiques          0-10 % (m/m),

dans lequel, pour la fonctionnalisation du pigment par aminosilane, le pigment est dispersé dans une solution d'un aminosilane dans un solvant ou un mélange d'un solvant et d'un liant
sans addition d'un dispersant non-aminosilane
avec ou sans broyage consécutif et avec l'utilisation de 0,05-30 % (m/m) d'aminosilane sur pigment
et l'utilisation d'un composé de cétone, ester, éther ou alcool aromatique, aliphatique, cycloaliphatique, ou d'un mélange de ceux-ci comme solvant et l'utilisation d'un liant à base de silicone-polyester, polyuréthane ou fluoropolymère, alors que ladite procédure est effectuée in situ pendant la préparation d'une peinture servant à fabriquer le revêtement
ou en impliquant une production de pâte de pigment
ou suivie d'un isolement du pigment fonctionnalisé par aminosilane.

**2.** Revêtement sur cuivre ou aluminium selon la revendication 1, préparé par l'utilisation de la pâte de pigment, la pâte de pigment ayant une teneur en matières solides de :

- le pigment fonctionnalisé par aminosilane          30-90 % (m/m),
- un liant          7-70 % (m/m),
- des additifs tels que, sans s'y limiter, des additifs rhéologiques          0-10 % (m/m).

**3.** Revêtement à sélectivité spectrale insensible à l'épaisseur (TISS) sur cuivre ou aluminium appliqué par laquage en continu et ayant une teneur en matières solides de :

- un pigment inorganique fonctionnalisé par aminosilane d'au moins          5 % (m/m),
- des paillettes métalliques          10-50 % (m/m),
- d'autres pigments          0-40 % (m/m),
- un liant          25-70 % (m/m),
- des charges          0-30 % (m/m),
- des additifs tels que, sans s'y limiter, des additifs rhéologiques          0-10 % (m/m),

dans lequel, pour la fonctionnalisation du pigment par aminosilane, le pigment est dispersé dans une solution d'un aminosilane dans un solvant ou un mélange d'un solvant et d'un liant
sans addition d'un dispersant non-aminosilane

avec ou sans broyage consécutif et avec l'utilisation de 0,05-30 % (m/m) d'aminosilane sur pigment
et l'utilisation d'un composé de cétone, ester, éther ou alcool aromatique, aliphatique, cycloaliphatique, ou d'un mélange de ceux-ci comme solvant et l'utilisation d'un liant à base de silicone-polyester, polyuréthane ou fluoropolymère, alors que ladite procédure est effectuée

in situ pendant la préparation d'une peinture servant à fabriquer le revêtement
ou en impliquant une production de pâte de pigment
ou suivie d'un isolement du pigment fonctionnalisé par aminosilane.

**4.** Revêtement sur cuivre ou aluminium selon la revendication 3, préparé par l'utilisation de la pâte de pigment, la pâte de pigment ayant une teneur en matières solides de :

- le pigment fonctionnalisé par aminosilane        30-90 % (m/m),
- un liant        7-70 % (m/m),
- des additifs tels que, sans s'y limiter, des additifs rhéologiques        0-10% (m/m).

**5.** Revêtement sur cuivre ou aluminium selon une des revendications 1 à 4, **caractérisé par** une sélectivité spectrale $a_S \geq 0,90$ de coefficient d'absorption solaire et par un coefficient d'émission thermique $e_T \leq 0,40$, de préférence $e_T \leq 0,20$.

**6.** Revêtement sur cuivre ou aluminium selon une des revendications 1 à 5, le laquage en continu étant effectué sous la forme d'une application d'une peinture ou d'une laque par des rouleaux.

**7.** Revêtement sur cuivre ou aluminium selon une des revendications 1 à 6, le laquage en continu étant effectué sous la forme d'une application d'une peinture ou d'une laque par une ou plusieurs filières plates.

**8.** Bobine de cuivre ou d'aluminium avec un revêtement selon une des revendications 1 à 7.

Fig. 1

| 10 µm | EHT = 1.00 kV | Signal A = InLens | Mix Signal = 0.1000 | Chamber = 4.33e-004 Pa | Date :27 Nov 2008 |
| | WD = 4 mm | Aperture Size = 30.00 µm | File Name = N 28 1-10_09.tif | | |

Fig. 2

Fig. 3

Fig. 4

Fig. 5

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. OREL ; Z. C. OREL ; A. KRAINER ; M. G. HUTCHINS.** FTIR spectroscopic investigations and the thermal stability of thickness sensitive spectrally selective (TSSS) paint coatings. *Solar Energy Materials,* 1991, vol. 22, 259-279
- **M. HOEFLAAK.** Optimization of spectrally selective coatings for flat plate solar collectors, 8th International conference. *Optimising paint formulation: preservation, stabilisation and care,* November 1988
- **M. KOHL ; G. JORGENSEN ; A.W. CZANDERNA.** Performance and Durability Assessment: Optical Materials for Solar Thermal Systems. Elsevier, The Netherlands, 2004
- Spectrally selective materials for efficient visible, solar and thermal radiation control. **M.G. HUTCHINS.** Solar Thermal Technologies for Buildings. James & James, 2003
- CIE Technical report: Colorimetry. The International Commission on Illumination, Wien, 2004, 17